# FASCICULE DE BREVET EUROPEEN

(11) **EP 2 760 587 B1**
(45) Date de publication et mention de la délivrance du brevet: **15.07.2015**
(21) Numéro de dépôt: 12756787.3
(22) Date de dépôt: 23.08.2012
(51) Int. Cl.: B03B 9/00, B23D 59/00

(54) **PROCEDE D'ETABLISSEMENT D'UNE STRATEGIE DE DECOUPE D'UN ECRAN PLAT**
VERFAHREN ZUR FESTLEGUNG EINER STRATEGIE ZUM AUSSCHNEIDEN EINES FLACHBILDSCHIRMS
METHOD FOR ESTABLISHING A STRATEGY FOR CUTTING OUT A FLAT SCREEN

(30) Priorité: 30.09.2011 FR 1158778
(43) Date de publication de la demande: 06.08.2014
(73) Titulaire: Veolia Propreté, 92000 Nanterre (FR)
(72) Inventeur: SANGLIER, Christophe, F-95100 Argenteuil (FR); LABONNE, Ella, F-78100 Saint Germain en Laye (FR); MAITROT, Aude, F-75020 Paris (FR)
(74) Mandataire: Novagraaf Technologies
(86) Numéro de dépôt international: PCT/FR2012/051927
(87) Numéro de publication internationale: WO 2013/045781

(56) Documents cités:
- FR-A1- 2 943 263
- US-A1- 2004 002 276

## Description

La présente invention concerne la préparation de la déconstruction, c'est-à-dire le démantèlement, d'écrans plats, et plus précisément elle se rapporte à un procédé pour la découpe d'un écran plat selon le préambule de la revendication 1. Un tel procédé est connu du document FR 2 943 263 A1.

Elle s'applique à tout type d'écran plat, pour des écrans de type ordinateur ou de type télévision, qu'il s'agisse d'écrans possédant une dalle à cristaux liquides (LCD pour *Liquid Crystal Display*) et lampes de rétro-éclairage (CCFL, LED ou autre) ou d'autres technologies d'écrans tels que :
- Plasma,
- OLED (Diode Electroluminescente Organique),
- SED (*Surface-conduction Electron-emitter Display*),
- FED (*Field Emission Display*),
- OEL (*Organic Electroluminescent*),
- PLED (diodes électroluminescentes à polymère, ou
- PHOLED (*Phosphorescent Organic Light-Emitting Diode) .*

Pour plus de concision, il sera fait essentiellement référence aux écrans LCD.

Classiquement, un écran plat 10 comprend des éléments structurels et des éléments fonctionnels.

Les éléments fonctionnels comprennent les divers éléments permettant la visualisation d'images sur l'écran, c'est-à-dire notamment une dalle de visualisation 12 ou « dalle », au moins une carte électronique 14 et par exemple des filtres polarisants 16, un éventuel diffuseur de lumière 17 et des lampés de rétroéclairage 13, le plus souvent situées sous la dalle.

Les éléments structurels comprennent un cadre 11 et une ossature 15. L'ossature, généralement métallique, permet d'arrimer certains au moins des éléments fonctionnels et peut envelopper certains éléments fonctionnels tels que la dalle, les filtres, d'éventuels diffuseurs, et les lampes. Le cadre, généralement en plastique, forme une enveloppe extérieure de la dalle et qui peut cacher ou contenir d'autres éléments fonctionnels de l'écran, par exemple des haut-parleurs.

Le cadre 11 recouvre partiellement la dalle sur sa périphérie, selon une forme sensiblement rectangulaire, de sorte que la dalle visible non recouverte par le cadre est dénommée « dalle apparente ». Le cadre a essentiellement une fonction esthétique et parfois une fonction structurelle lorsque divers éléments de l'écran sont directement rattachés dessus.

La dalle et/ou les lampes peuvent contenir des éléments polluants.

Pour détruire ou dépolluer ces écrans plats en fin de vie, il existe des procédés industriels de broyage, au moins partiel, de ces écrans au cours desquels la dalle et/ou les lampes de rétro-éclairage sont en général détruits ou partiellement endommagés. Dès lors, de tels procédés peuvent entraîner la libération de gaz et de substances toxiques, tels que le mercure par exemple, dans l'air, sur le sol, ou directement au contact des constituants de l'écran susceptibles d'être recyclés.

Ce qui pose des difficultés de récupération de constituants valorisables, notamment les cristaux liquides, et de métaux, par exemple l'indium, de l'écran.

L'invention concerne un procédé d'établissement d'une stratégie de découpe d'un écran plat selon la revendication 1, comprenant une dalle apparente et un cadre, en vue de la valorisation d'une partie au moins de ses constituants, comprenant des étapes consistant à :
- déterminer les dimensions de la dalle apparente et les dimensions externes de l'écran au moins dans le plan de la dalle apparente,
- définir la position tridimensionnelle de l'écran dans un repère tridimensionnel,
- définir dans le repère au moins une ligne de référence parallèle à l'un des bords du cadre de l'écran, et
- définir au moins une ligne de découpe du cadre dont la distance à la ligne de référence est constante et prédéterminée.

De préférence le procédé comprend une étape de détection de la présence d'au moins un élément caractéristique de l'écran parmi un ensemble comprenant :
- un connecteur spécifique,
- un haut-parleur,
- la marque commerciale et/ou le nom du modèle de l'écran, et
- un code barre ou un datamatrix.

Par « stratégie de découpe » on entend la définition des coordonnées tridimensionnelles d'au moins une ligne de découpe dans le repère tridimensionnel.

Grâce à l'invention, la ligne de découpe peut suivre la forme du cadre, y compris lorsque celui-ci est déformé.

De préférence, la ligne de référence est une ligne droite.

De préférence, la ligne de référence est parallèle au plan de la dalle ou perpendiculaire au plan de la dalle.

La ligne de référence peut être définie sur l'écran, c'est-à-dire sur la dalle apparente ou sur le cadre, ou en dehors de l'écran.

Dans un mode de réalisation, la ligne de référence est l'intersection entre la dalle apparente et l'un des bords intérieurs du cadre de l'écran.

Lorsque l'étape de détection de la présence d'au moins un élément caractéristique de l'écran est mise en oeuvre, on peut prévoir en outre au moins l'une des étapes consistant à :
- définir la position du connecteur spécifique,
- mesurer les dimensions du haut-parleur et définir sa position dans le repère,
- effectuer une reconnaissance optique de la marque et/ou du nom du modèle,
- effectuer une reconnaissance optique du code barre ou du datamatrix.

On peut également prévoir de définir la position dans le repère de la marque et/ou du nom du modèle, ainsi que la position du code barre ou du datamatrix.

Selon l'invention, on prévoit en outre l'étape consistant à
comparer à des valeurs de référence dans une base de données
les dimensions de la dalle apparente et les dimensions externes de l'écran, et de préférence
la présence d'un élément caractéristique de l'écran,
la position de l'élément caractéristique, et
les dimensions de l'élément caractéristique ; et
en déduire dans la base de données la valeur d'un ensemble d'au moins une valeur correspondante de la distance prédéterminée de la ligne de découpe.

Par exemple, le procédé peut comprendre une étape consistant à comparer en outre à des valeurs de référence de la base de données, l'un au moins des éléments parmi :
- existence d'un connecteur spécifique,
- position d'un connecteur spécifique,
- existence d'un haut-parleur,
- position d'un haut-parleur,
- dimensions d'un haut-parleur,
- existence d'une marque commerciale, et identification de celle-ci,
- existence d'un nom du modèle de l'écran, et libellé de celui-ci,
- existence d'un code barre, et signification de celui-ci,
- existence d'un datamatrix, et signification de celui-ci,
pour en déduire dans la base de données la valeur d'un ensemble d'au moins une valeur correspondante de la distance prédéterminée de la ligne de découpe.

De préférence, lorsque plusieurs valeurs de distances prédéterminées sont déduites, le procédé comprend en outre une étape de sélection de la plus grande valeur de distance parmi l'ensemble de valeurs.

Dans un mode de réalisation, on prévoit en outre une étape de représentation graphique visible à l'oeil nu de la ligne de découpe sur une interface graphique et/ou sur le cadre de l'écran.

Dans un mode de réalisation, on prévoit une étape de profilométrie laser, pour déterminer au moins les dimensions de la dalle apparente et les dimensions externes de l'écran.

De préférence, l'étape de profilométrie laser est mise en oeuvre sur la face avant (c'est-à-dire la face de visualisation) de l'écran, le faisceau laser recouvrant la dalle apparente et le cadre.

Dans un mode de réalisation, on prévoit en outre une étape de découpe de l'écran selon la ligne de découpe.

De préférence, on prévoit que la découpe est effectuée selon une profondeur de découpe prédéfinie.

Dans un mode de réalisation, on prévoit que la profondeur de découpe est asservie à la détection d'au moins un élément caractéristique de l'écran.

Dans un mode de réalisation, on prévoit un programme d'ordinateur comprenant des instructions de code de programme pour l'exécution des étapes d'un procédé tel que défini ci-avant lorsque ledit programme est exécuté sur un ordinateur.

Grâce à l'invention, au moins certains éléments structurels et/ou fonctionnels peuvent être désolidarisés, et l'intégrité au moins de la dalle peut être conservée.

L'invention est avantageusement compatible avec tous les types d'écrans : téléviseurs et moniteurs d'ordinateurs (incluant les tablettes tactiles, les PDA, les téléphones intelligents ; les dispositifs de navigation par satellite, etc.)

L'invention peut avantageusement être mise en oeuvre quels que soient l'état (neuf, abimé, usagé), la taille ou le poids de l'écran.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un écran plat vu de face, dalle apparente, avec une ligne de référence et une ligne de découpe,
- la figure 2 illustre une coupe transversale d'un écran plat pour une stratégie de découpe latérale,
- la figure 3 illustre une coupe transversale d'un écran plat pour une stratégie de découpe frontale,
- la figure 4 illustre un mode de réalisation du procédé selon l'invention, et
- la figure 5 illustre une coupe transversale d'un écran plat LCD.

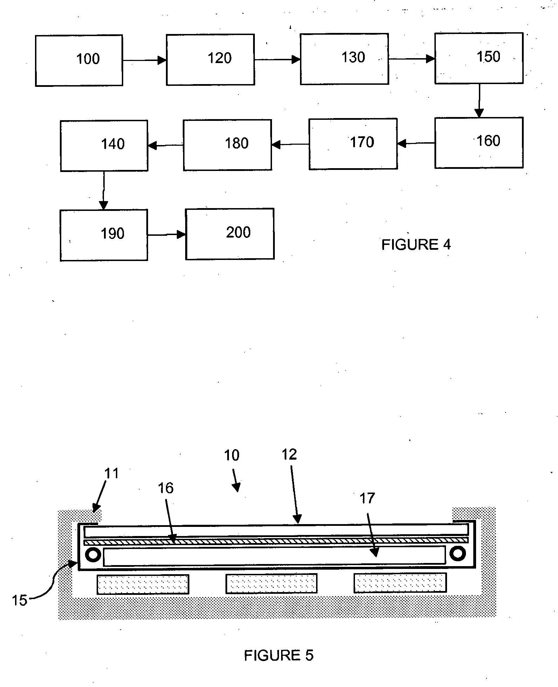

La configuration interne d'un écran plat 10, par exemple LCD, varie d'un écran à l'autre et d'un type d'écran à l'autre. Comme illustré figure 5, dans un écran LCD, les lampes sont en arrière plan par rapport à la dalle. Elles sont soit uniformément réparties derrière la dalle, soit réparties à la périphérie mais toujours en retrait par rapport au plan de la dalle.

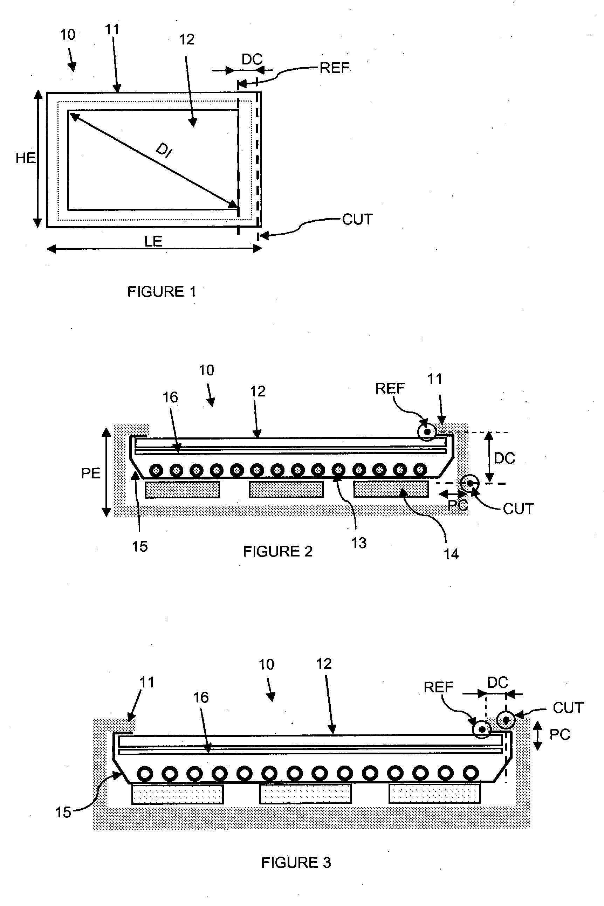

Par exemple, il existe des écrans à rétro-éclairage direct, par exemple des écrans LCD, dans lesquels les lampes de rétro-éclairage (lampes à mercure CCFL ou lampes LED dites *full LED* par anglicisme) sont réparties derrière toute la surface de la dalle (Figure 2, Figure 3).

Dans ce cas, on prévoit de découper le cadre et éventuellement en outre l'ossature métallique supplémentaire. En ce qui concerne les technologies plasma, on ne peut pas à proprement parler d'éclairage direct ou indirect. En effet, dans un plasma, c'est la dalle plasma qui est une source lumineuse mais pour la découpe, on peut assimiler un écran plasma à un écran à rétro-éclairage direct.

Pour ce genre de configuration interne, on peut faire une découpe frontale, comme illustré figure 3, c'est-à-dire découper le cadre de l'écran par la face avant (face de visualisation), autour de la dalle, sur une partie au moins de la périphérie du cadre dans le plan de la dalle apparente. En fonction de la profondeur de découpe PC, une découpe frontale peut également permettre de découper l'ossature métallique 15 en même temps que le cadre 11.

On peut également découper le cadre de l'écran selon une technique mixte consistant à découper le cadre de l'écran :
- selon une découpe frontale, par la face avant (face de visualisation), selon deux lignes situées dans le plan de la dalle apparente sur deux côtés opposés du cadre, et
- selon une découpe latérale, comme illustré figure 2, par les côtés, selon deux lignes situées dans des plans perpendiculaires à la dalle apparente, sur les deux autres côtés du cadre.

De préférence les lignes de découpe CUT par la face avant sont parallèles entre elles et parallèles aux lampes 13.

De tels écrans sont typiquement de type écran de télévision.

Il existe également des écrans à rétro-éclairage indirect, par exemple des écrans LCD, dans lesquels la ou les lampes de rétro-éclairage (lampes à mercure CCFL ou barrettes de LEDs, par exemple) ne sont pas réparties sur toute la surface mais concentrées en périphérie de la dalle sur un ou plusieurs côtés de celle-ci et en retrait par rapport au plan de la dalle.

Dans ce cas, les lampes sont solidaires d'une structure métallique qui enveloppe la périphérie de la dalle et les filtres, sous forme d'un bloc unitaire. La structure métallique peut être l'ossature métallique 15 évoquée précédemment ou distincte de celle-ci : par exemple l'ossature qui encapsule directement la dalle, les filtres et les lampes, et la structure métallique qui englobe l'ossature.

A cause de sa structure unitaire compacte, il est souhaitable que le bloc unitaire soit désolidarisé de l'écran en bloc, c'est-à-dire en conservant son intégrité. On prévoit donc de découper le cadre 11 (et l'ossature métallique distincte lorsqu'elle existe) pour retirer le bloc unitaire. Le bloc unitaire peut être traité ultérieurement dans d'autres procédés de valorisation. Sur la figure 2 et sur la figure 3, l'ossature métallique 15 est le bloc unitaire.

Pour ce genre de configuration interne, on peut faire une découpe latérale, c'est-à-dire découper le cadre de l'écran par les côtés (perpendiculaires à la dalle apparente), sur toute la périphérie du cadre. Ce qui permet de libérer le bloc unitaire. Une découpe latérale peut également être mise en oeuvre pour des écrans sertis.

De tels écrans sont typiquement de type écran d'ordinateur.

Il existe une relation entre le type d'écran et la configuration interne de celui-ci. Connaître le type d'écran permet de connaître sa configuration interne, donc de déterminer si la découpe doit être frontale (se faire sur la face avant) et/ou latérale (sur les côtés de l'écran). Connaître les caractéristiques techniques d'un écran, c'est-à-dire certains au moins de ses éléments caractéristiques, peut permettre de régler les paramètres de découpe (distance à la ligne de référence, profondeur de découpe).

Pour la valorisation d'une partie au moins des éléments constitutifs d'un écran plat en fin de vie, un écran est réceptionné en l'état.

On peut prévoir une étape préalable 100 de préparation. Dans ce cas, la préparation consiste par exemple à retirer le pied, ou support, de l'écran ; retirer d'éventuels câbles ainsi que d'éventuels éléments esthétiques (plaque de verre additionnelle recouvrant toute la face avant, autocollants, etc.) ou fonctionnels tels qu'une dalle tactile par exemple.

La préparation est de préférence réalisée par un opérateur.

L'écran est ensuite bridé sur un système de bridage, duquel il est rendu solidaire. Cette mise en place peut être réalisée :
- Manuellement, par exemple par un opérateur qui manipule à la main l'écran et le pose sur le système de bridage ;
- Automatiquement, par exemple par un robot muni d'un outil de préhension (pince, ventouse, ...) qui prend l'écran et le dépose sur le système de bridage ; ou
- Semi-automatiquement, par exemple par un opérateur qui opère un système de manutention qui vient déposer l'écran sur le système de bridage.

On prévoit alors de déterminer les dimensions de la dalle apparente, c'est-à-dire des dimensions internes du cadre 11 dans le plan de dalle, par exemple la diagonale interne DT, et les dimensions externes de l'écran au moins dans le plan de la dalle apparente, ce qui correspond aux dimensions externes LE, HE du cadre. On peut prévoir en outre de mesurer les dimensions externes de l'écran dans un plan perpendiculaire à celui de la dalle apparente, ce qui correspond à l'épaisseur PE (ou la profondeur) du cadre.

L'étape de détermination 110 peut être mise en oeuvre par tout outil de mesure de dimensions ou par profilométrie laser (décrite ultérieurement). Elle peut être au moins partiellement mise en oeuvre par le bridage lui-même qui permet de déterminer les dimensions externes du cadre.

On prévoit également de définir 120 la position tridimensionnelle de l'écran dans un repère tridimensionnel.

La position tridimensionnelle de l'écran peut être déterminée par le bridage lui-même dans un repère tridimensionnel correspondant au repère tridimensionnel du système de bridage, ou déterminée par un système de profilométrie laser.

Le système de profilométrie laser et le système de découpe, tous deux décrits ultérieurement, comprennent leur propre repère tridimensionnel. Le système de bridage peut comprendre son propre repère tridimensionnel. L'homme du métier connaît les changements de repère. On considère donc indistinctement l'un des repères tridimensionnels, quel qu'il soit.

Une fois les dimensions de l'écran et sa position tridimensionnelle déterminées, on prévoit de définir 130 dans le repère au moins une ligne de référence REF.

La ligne de référence REF peut s'adapter à la forme d'un côté du cadre. C'est-à-dire qu'elle est droite lorsque le cadre est droit ou courbe lorsque le cadre est courbe (par construction ou par détérioration).

La ligne de référence REF peut être déterminée sur l'écran (c'est-à-dire sur la dalle apparente 12 ou sur le cadre 11), ou en dehors de celui-ci. La ligne de référence est parallèle à l'un des bords extérieur ou intérieur du cadre. En l'espèce, comme illustré figure 2, elle correspond à l'intersection entre la dalle apparente 12 et l'un des bords intérieurs du cadre de l'écran, elle est donc parallèle au plan de dalle.

Une fois la ligne de référence REF déterminée, on prévoit de définir 140 dans le repère au moins une ligne de découpe CUT du cadre dont la distance DC par rapport à la ligne de référence (éventuellement dans un plan parallèle à la dalle apparente ou dans un plan perpendiculaire à la dalle apparente) est constante et prédéterminée. La ligne de référence REF et la ligne de découpe CUT sont donc parallèles.

La connaissance de la position de la ligne de référence permet de définir la position de la ligne de découpe, donc de pouvoir obtenir éventuellement une ligne de découpe courbe lorsque la ligne de référence est courbe.

Comme vu précédemment, la ligne de découpe CUT du cadre peut être localisée dans un plan parallèle à celui de la dalle apparente (côté face de visualisation, voir figure 2) et/ou sur une face latérale (figure 3), c'est-à-dire dans un plan perpendiculaire au plan de la dalle.

L'étape de profilométrie laser évoquée précédemment permet d'obtenir la topographie (tridimensionnelle) et la position tridimensionnelle de l'écran. Elle est avantageuse car rapide, peu onéreuse, et non intrusive.

Un système de profilométrie laser (non illustré) est calibré et comprend un laser et une caméra. Le laser projette un faisceau plan sur l'écran dont il résulte un trait de lumière sur celui-ci. Le laser est incliné d'un angle donné, par exemple de 30° à 45°, par rapport à l'axe optique de la caméra qui scrute une zone où le trait laser est projeté en réflexion, de manière à imager les déformations du trait dues au relief de l'écran, c'est-à-dire à la géométrie de la dalle apparente et du cadre. De préférence, l'axe optique de la caméra ou le plan du faisceau laser est orthogonal au plan de la dalle apparente.

Le mouvement de la caméra est solidaire du mouvement du laser, par exemple en étant portés tous deux par un bras robotisé (non illustré). Ce bras permet de produire un mouvement de translation (balayage) de l'ensemble caméra-laser.

Un écran peut être balayé par le laser en une ou plusieurs fois.

Dans un mode de réalisation, le robot peut faire pivoter l'ensemble caméra-laser. Il est possible d'effectuer une première étape de profilométrie laser d'un côté du cadre dans un sens, puis une deuxième étape de profilométrie laser sur un autre côté en fonction de l'angle de rotation : par exemple du côté opposé dans l'autre sens pour une rotation de 180°, ou le long d'un côté perpendiculaire pour une rotation de 90°.

La caméra acquiert un ensemble d'images (échantillonnage) au cours du mouvement. Sur chaque image, une ligne plus ou moins déformée, et éventuellement discontinue, est observable. Cette ligne, appelée profil, représente la déformation du trait laser sur le relief de l'écran.

Les images du profil obtenu permettent, par des algorithmes de traitement d'image connus et grâce à la calibration du système de profilométrie laser, de reconstruire le profil tridimensionnel de l'écran, c'est-à-dire de déterminer au moins les dimensions de la dalle apparente et les dimensions externes de l'écran. Elles peuvent également permettre de déterminer la position tridimensionnelle de l'écran dans un repère tridimensionnel.

Les dimensions et la position tridimensionnelle des bords intérieurs du cadre peuvent donc être connues par profilométrie laser et dans un mode de réalisation, l'intersection entre la dalle apparente et un bord intérieur du cadre de l'écran sert de ligne de référence.

Les dimensions externes ou de la dalle apparente de certains écrans permettent parfois de déduire sans ambigüité le type d'écran.

Par exemple, pour les écrans de taille inférieure à 20 pouces, il est probable que l'écran soit à rétroéclairage indirect, on peut faire une découpe latérale.

Pour les écrans de taille supérieure à 26 pouces, il est probable que l'écran soit à rétroéclairage direct, on peut faire une découpe frontale ou mixte.

Pour les écrans de taille intermédiaires, il est parfois difficile de déduire sans ambigüité le type d'écran. Or appliquer une stratégie de découpe inappropriée au type d'écran peut risquer d'endommager le bloc unitaire ou mettre en danger l'intégrité des éléments contenant des polluants.

Pour aider à dissiper l'éventuelle ambigüité, on peut prévoir une étape de détection 150, en l'espèce optique, de la présence d'au moins un élément caractéristique de l'écran.

L'élément caractéristique peut être un connecteur spécifique tel qu'une prise Péritélévision ou une prise d'antenne dont la présence permet de déduire qu'il s'agit probablement d'un écran de type télévision.

L'élément caractéristique peut être un haut-parleur ou une grille, notamment sur la face avant ou sur la face arrière de l'écran, dont la présence permet de déduire qu'il s'agit probablement d'un écran de type télévision.

La présence d'une marque commerciale (éventuellement sous forme de logo sur l'écran ou une étiquette) et/ou du nom du modèle de l'écran peut permettre d'identifier l'écran, donc s'il s'agit d'un écran de type télévision ou d'ordinateur.

La présence d'un code barre ou d'un datamatrix et la lecture optique de celui-ci permet d'identifier le type d'écran.

La technologie de l'écran (LCD, CCFL, LED, Plasma, ...) peut également être identifiée par l'opérateur.

La position et/ou les dimensions d'un élément caractéristique peuvent être également déterminés, notamment par profilométrie laser.

De préférence, au moins l'une des informations parmi la présence d'un élément caractéristique de l'écran, la position, et les dimensions de celui-ci est enregistrée dans une base de données.

La reconnaissance optique peut être mise en oeuvre par l'opérateur et/ou par l'étape de profilométrie laser. La lecture optique du code-barre / datamatrix peut être mise en oeuvre par tout type de lecteur, par exemple infra rouge.

On prévoit en outre une étape consistant à comparer 160 les dimensions de la dalle apparente et les dimensions externes de l'écran à des valeurs de référence de la base de données, et lorsqu'ils existent, à comparer en outre à des valeurs de référence de la base de données, l'un au moins des éléments parmi :
- existence d'un connecteur spécifique,
- position d'un connecteur spécifique,
- existence d'un haut-parleur,
- position d'un haut-parleur,
- dimensions d'un haut-parleur,
- existence d'une marque commerciale, et identification (libellé/logo) de celle-ci,
- existence d'un nom du modèle de l'écran, et libellé de celui-ci,
- existence d'un code barre, et signification de celui-ci,
- existence d'un datamatrix, et signification de celui-ci.

L'ensemble de ces informations permettent au moins d'aider à identifier un type d'écran. Il est éventuellement possible d'identifier un modèle précis d'écran.

La base de données contient des caractéristiques techniques associées à un ensemble de modèles d'écrans, comprenant l'un au moins des éléments évoqués ci-dessus ainsi que les différentes dimensions du cadre, l'épaisseur du cadre, etc. Il existe dans la base de données une correspondance entre certaines au moins de ces informations et au moins une valeur correspondante de la distance prédéterminée de la ligne de découpe, la distance étant calculée ou déterminée par rapport à la ligne de référence déterminée précédemment. Plus précisément, la distance prédéterminée DC de la ligne de découpe peut être déterminée par rapport à une autre ligne de référence. Un simple changement de repère entre les deux lignes de référence permet dans ce cas de calculer la distance par rapport à la ligne de référence déterminée précédemment. De préférence dans ce cas, les deux lignes de références sont parallèles.

En fonction de l'un au moins des éléments évoqués ci-dessus, on peut alors rechercher dans la base de données le ou les modèles d'écrans correspondants et leurs caractéristiques techniques associées.

La base de données permet d'en déduire 170 la valeur d'un ensemble d'au moins une valeur correspondante de la distance prédéterminée DC de la ligne de découpe et de préférence de la profondeur de découpe PC.

Il peut arriver que plusieurs valeurs de distances prédéterminées soient déduites de la base de données. Dans ce cas, on prévoit avantageusement une étape de sélection 180 de la plus grande valeur de distance parmi l'ensemble de valeurs.

Grâce à l'invention, on peut donc asservir la valeur de la distance prédéterminée au type d'écran, et éventuellement en outre à la position d'un élément caractéristique, ou aux dimensions de celui-ci.

Ainsi pour une découpe frontale par exemple connaissant au moins la position de la ligne de référence, le diamètre interne DI de l'écran, et les dimensions externes LE, HE de l'écran 11 ; la base de données permet par exemple de connaître la taille réelle de la dalle, c'est-à-dire de définir une distance de découpe DC telle que la ligne de découpe CUT soit située au-delà de la partie extérieure de la dalle (cachée par le cadre 11 et représentée en pointillées figure 1), de telle sorte que la découpe 200 du cadre peut être mise en oeuvre sans risquer de découper la dalle 12 (figure 1 et figure 3). De même, pour une découpe latérale (figure 2) la base de données permet par exemple de déterminer la distance de découpe DC minimale telle que la ligne de découpe CUT soit située au-delà du bloc unitaire ou au-delà des lampes 13 afin de ne pas risquer de les endommager.

La position tridimensionnelle de la ligne de référence et la position tridimensionnelle de la ligne de découpe étant connues, on peut prévoir en outre une étape de représentation graphique 190 de la ligne de découpe CUT, telle que celle-ci soit visible à l'oeil nu, ce qui peut permettre à un opérateur de valider visuellement la ligne de découpe avant l'étape de découpe 200 du cadre. Par exemple, la ligne de découpe CUT peut être représentée sur une interface graphique, en particulier celle utilisée pour la profilométrie laser. La ligne de découpe CUT peut être représentée directement sur le cadre 11 de l'écran, par exemple par illumination laser ou marquage (thermique, à l'encre, etc.).

On prévoit également une étape de découpe 200 de l'écran selon la ligne de découpe CUT, grâce aux coordonnées de la ligne de découpe déterminées par rapport à la ligne de référence REF qui permettent de guider la trajectoire d'un outil automatique de découpe, ou grâce à une reconnaissance optique (visuelle ou automatique) de la représentation graphique de la ligne de découpe qui permet de guider la trajectoire d'un outil manuel ou automatique de découpe. Ce qui peut être utile notamment dans des cas où le robot tenant l'outil, de découpe n'est guidé qu'au moyen d'un système de reconnaissance optique, par exemple de la ligne laser CUT tracée sur l'écran.

De préférence, la découpe est effectuée selon une profondeur de découpe PC prédéfinie, par un système de découpe.

La profondeur de découpe PC est par exemple définie comme étant la profondeur de pénétration d'un outil de découpe dans l'écran par rapport à la ligne de découpe et le long de celle-ci.

De préférence, la profondeur de découpe PC fait typiquement de l'ordre de plusieurs millimètres. On peut prévoir qu'elle soit asservie à la détection d'au moins un élément caractéristique de l'écran.

Le système de découpe comprend un outil de découpe, par exemple une scie circulaire, un jet d'eau, un laser, etc. manuel ou automatique.

## Revendications

1. Procédé pour la découpe d'un écran plat (10) comprenant une dalle apparente (12) et un cadre (11), en vue de la valorisation d'une partie au moins de ses constituants,
comprenant des étapes consistant à :
- déterminer (110) les dimensions de la dalle apparente et les dimensions externes de l'écran au moins dans le plan de la dalle apparente,
- définir (120) la position tridimensionnelle de l'écran dans un repère tridimensionnel,
- définir (130) alors dans le repère au moins une ligne de
- référence (REF) parallèle à l'un des bords du cadre, et
- définir (140) au moins une ligne de découpe (CUT) du cadre dont la distance (DC) à la ligne de référence est constance et prédéterminée,
**caractérisé par** des étapes consistant à
- comparer (160) les dimensions de la dalle apparente et les dimensions externes de l'écran à des valeurs de référence dans une base de données, et
- en déduire (170) la valeur d'un ensemble d'au moins une valeur de la distance de la ligne de découpe (CUT) à la ligne de référence (REF).

2. Procédé selon la revendication 1, comprenant
- une étape (150) de détection optique de la présence d'au moins un élément caractéristique de l'écran parmi un ensemble comprenant :
un connecteur spécifique, un haut-parleur, la marque commerciale et/ou le nom du modèle de l'écran, et un code barre ou un datamatrix.

3. Procédé selon la revendication 2, comprenant au moins l'une des étapes consistant à :
- définir la position tridimensionnelle du connecteur spécifique,
- déterminer les dimensions du haut-parleur et définir sa position dans le repère,
- effectuer une reconnaissance optique de la marque et/ou du nom du modèle,
- effectuer une reconnaissance optique du code barre ou du datamatrix.

4. Procédé selon la revendication 3, comprenant en outre des étapes consistant à
- comparer (160) à des valeurs de référence dans la base de données au moins l'une des informations parmi :
• la présence d'un élément caractéristique de l'écran,
• la position de l'élément caractéristique, et
• les dimensions de l'élément caractéristique pour identifier un type d'écran ; et
- en déduire (170) dans la base de données la valeur d'un ensemble d'au moins une valeur correspondante de la distance prédéterminée de la ligne de découpe.

5. Procédé selon la revendication 4, dans lequel lorsque plusieurs valeurs de distances prédéterminées sont déduites, le procédé comprend en outre une étape (180) de sélection de la plus grande valeur de distance parmi l'ensemble de valeurs.

6. Procédé selon l'une quelconque des revendications précédentes, comprenant en outre une étape (190) de représentation graphique visible à l'oeil nu de la ligne de découpe, sur une interface graphique et/ou sur le cadre de l'écran.

7. Procédé selon l'une quelconque des revendications précédentes, comprenant une étape de profilométrie laser, pour déterminer (110) au moins les dimensions de la dalle apparente et les dimensions externes de l'écran.

8. Procédé selon l'une quelconque des revendications précédentes, comprenant en outre une étape (200) de découpe de l'écran selon la ligne de découpe.

9. Procédé selon la revendication 8, dans lequel la découpe est effectuée selon une profondeur de découpe (PC) prédéfinie.

10. Procédé selon la revendication 9, dans lequel la profondeur de découpe est asservie à la détection d'au moins un élément caractéristique de l'écran.

## Patentansprüche

1. Verfahren zum Ausschneiden eines Flachbildschirms (10), der ein sichtbares Panel (12) und einen Rahmen (11) enthält, zur Verwertung mindestens eines Teils seiner Bestandteile, das Schritte enthält, die darin bestehen
- die Abmessungen des sichtbaren Panels und die Außenabmessungen des Bildschirms zumindest in der Ebene des sichtbaren Panels zu ermitteln (110),
- die dreidimensionale Stellung des Bildschirms in einem dreidimensionalen Bezugssystem zu definieren (120),
- dann im Bezugssystem mindestens eine Bezugslinie (REF) parallel zu einem der Ränder des Rahmens zu definieren (130) und
- mindestens einer Schnittlinie (CUT) des Rahmens zu definieren (140), deren Abstand (DC) zur Bezugslinie konstant und vorbestimmt ist, **gekennzeichnet durch** Schritte, die darin bestehen
- die Abmessungen des sichtbaren Panels und die Außenabmessungen des Bildschirms mit Bezugswerten in einer Datenbank zu vergleichen (160), und
- daraus den Wert einer Gruppe von mindestens einem Wert des Abstands der Schnittlinie (CUT) zur Bezugslinie (REF) abzuleiten (170).

2. Verfahren nach Anspruch 1, das enthält
- einen Schritt (150) der optischen Erfassung des Vorhandenseins mindestens eines charakteristischen Elements des Bildschirms unter einer Gruppe, die enthält:
einen speziellen Verbinder, einen Lautsprecher, die Handelsmarke und/oder den Namen des Modells des Bildschirms und einen Strichcode oder ein Datamatrix.

3. Verfahren nach Anspruch 2, das mindestens einen der Schritte enthält, die darin bestehen:
- die dreidimensionale Stellung des speziellen Verbinders zu definieren,
- die Abmessungen des Lautsprechers zu ermitteln und seine Stellung im Bezugssystem zu definieren,
- eine optische Erkennung der Marke und/oder des Namens des Modells durchzuführen,
- eine optische Erkennung des Strichcodes oder des Datamatrix durchzuführen.

4. Verfahren nach Anspruch 3, das außerdem Schritte enthält, die darin bestehen
- mit Bezugswerten in der Datenbank mindestens eine der folgenden Informationen zu vergleichen (160) :
• das Vorhandensein eines charakteristischen Elements des Bildschirms,
• die Stellung des charakteristischen Elements, und
• die Abmessungen des charakteristischen Elements, um einen Bildschirmtyp zu identifizieren; und
- daraus in der Datenbank den Wert einer Gruppe von mindestens einem entsprechenden Wert des vorbestimmten Abstands der Schnittlinie abzuleiten (170).

5. Verfahren nach Anspruch 4, wobei, wenn mehrere vorbestimmte Abstandswerte abgeleitet werden, das Verfahren außerdem einen Schnitt (180) der Auswahl des größten Abstandswerts unter der Gruppe von Werten enthält.

6. Verfahren nach einem der vorhergehenden Ansprüche, das außerdem einen Schritt (190) der mit bloßem Auge sichtbaren grafischen Darstellung der Schnittlinie auf einer grafischen Schnittstelle und/oder auf dem Rahmen des Bildschirms enthält.

7. Verfahren nach einem der vorhergehenden Ansprüche, das einen Schritt der Laser-Profilmessung enthält, um zumindest die Abmessungen des sichtbaren Panels und die Außenabmessungen des Bildschirms zu ermitteln (110).

8. Verfahren nach einem der vorhergehenden Ansprüche, das außerdem einen Schritt (200) des Schneidens des Bildschirms gemäß der Schnittlinie enthält.

9. Verfahren nach Anspruch 8, wobei der Schnitt gemäß einer vordefinierten Schnitttiefe (PC) ausgeführt wird.

10. Verfahren nach Anspruch 8, wobei die Schnitttiefe von der Erfassung mindestens eines charakteristischen Elements des Bildschirms abhängt.

## Claims

1. Method for cutting out a flat screen (10) comprising a visible face plate (12) and a frame (11), in order to increase the value of at least some of its constituent parts,
comprising steps consisting in:
- determining (110) the dimensions of the visible face plate and the outer dimensions of the screen at least in the plane of the visible face plate,
- defining (120) the three-dimensional position of the screen in a three-dimensional reference frame,
- defining (130), in the reference frame, at least one reference line (REF) parallel to one of the edges of the frame, and
- defining (140) at least one cutting line (CUT) for the frame for which the distance (DC) to the reference line is constant and predetermined,
**characterized by** steps consisting in
- comparing (160) the dimensions of the visible face plate and the outer dimensions of the screen to reference values in a database, and
- deducing therefrom (170) the value of a set of at least one value of the distance from the cutting line (CUT) to the reference line (REF).

2. Method according to Claim 1, comprising
- a step (150) of optical detection of the presence of at least one characteristic element of the screen out of a set comprising:
a specific connector, a loudspeaker, the brand name and/or the name of the model of the screen, and a bar code or a data matrix.

3. Method according to Claim 2, comprising at least one of the steps consisting in:
- defining the three-dimensional position of the specific connector,
- determining the dimensions of the loudspeaker and defining its position in the reference frame,
- performing an optical recognition of the brand name and/or of the model name,
- performing an optical recognition of the bar code or of the data matrix.

4. Method according to Claim 3, further comprising steps consisting in
- comparing (160) to reference values in the database at least one of the information items out of:
• the presence of a characteristic element of the screen,
• the position of the characteristic element, and
• the dimensions of the characteristic element to identify a screen type; and
- deducing therefrom (170), in the database, the value of a set of at least one corresponding value of the predetermined distance from the cutting line.

5. Method according to Claim 4, in which, when a plurality of predetermined distance values are deduced, the method further comprises a step (180) of selection of the greatest distance value out of the set of values.

6. Method according to any one of the preceding claims, further comprising a step (190) of graphic representation visible to the naked eye of the cutting line, on a graphical interface and/or on the frame of the screen.

7. Method according to any one of the preceding claims, comprising a step of laser profilometry, to determine (110) at least the dimensions of the visible face plate and the outer dimension of the screen.

8. Method according to any one of the preceding claims, further comprising a step (200) of cutting of the screen along the cutting line.

9. Method according to Claim 8, in which the cutting is performed according to a predefined cutting depth (PC) .

10. Method according to Claim 9, in which the cutting depth is slaved to the detection of at least one characteristic element of the screen.
